# EUROPÄISCHE PATENTANMELDUNG

(11) **EP 4 036 337 A1**
(43) Veröffentlichungstag der Anmeldung: **03.08.2022**
(21) Anmeldenummer: 22153814.3
(22) Anmeldetag: 28.01.2022
(51) Int. Cl.: E03F 7/12, G01N 21/954, G03B 37/00

(54) **KAMERA FÜR EINEN KANALSANIERUNGSROBOTER UND KANALSANIERUNGSROBOTER**

(30) Priorität: 02.02.2021 DE 102021102394
(71) Anmelder: Frieß, Walter H., 89177 Börslingen (DE)
(72) Erfinder: Frieß, Walter H., 89177 Börslingen (DE)
(74) Vertreter: Baur & Weber Patentanwälte PartG mbB

(57) **Zusammenfassung**

Kamera (5) für einen Kanalsanierungsroboter umfassend einen Kamerakopf (9), der mittels einer ersten Antriebsvorrichtung drehbar ist, und eine Reinigungsvorrichtung (21) mit einem Wischer (23), die mittels einer zweiten Antriebsvorrichtung relativ zum Kamerakopf (9) drehbar ist, sodass sich der Wischer (23) um den Kamerakopf (9) dreht und so eine Oberfläche des Kamerakopfes (9) reinigt.

## Beschreibung

Die Erfindung betrifft eine Kamera für einen Kanalsanierungsroboter sowie einen Kanalsanierungsroboter mit solch einer Kamera. Der Kanalsanierungsroboter ist zum Einsatz in einem Rohr oder Kanal, insbesondere einem Abwasserrohr oder Entwässerungsrohr, vorgesehen.

Ein Kanalsanierungsroboter ist ein kompaktes, üblicherweise ferngesteuertes Fahrzeug, das in einen Kanal oder ein Rohr einfährt, um den Zustand des Kanals oder Rohres zu inspizieren und/oder Wartungs-, Sanierungs- und/oder Montagearbeiten darin durchzuführen. Der Kanalsanierungsroboter kann beispielweise in einem Abwasserrohrsystem oder in einem Entwässerungsrohrsystem einer Deponie oder Halde eingesetzt werden. Die Bewegung des Kanalsanierungsroboters kann von einem Benutzer ferngesteuert werden.

Der Kanalsanierungsroboter umfasst eine Kamera, deren Bilder üblicherweise zu einem externen Gerät außerhalb des Rohrs oder Kanals übertragen werden können. Die Bilder erlauben die Orientierung im Kanal- oder Rohrsystem, eine Beurteilung des Zustands des Kanals oder Rohrs und gegebenenfalls die Überwachung der vom Kanalsanierungsroboter durchgeführten Arbeiten. Die Kamera kann schwenkbar ausgebildet sein, sodass außer dem Blick in Fahrtrichtung zumindest auch ein Schwenk nach oben und unten möglich ist. Darüber hinaus kann der Kanalsanierungsroboter Werkzeuge für Arbeiten im Kanal- oder Rohrsystem und/oder Probenentnahmen aufweisen. Ferner kann der Kanalsanierungsroboter eine Beleuchtungsvorrichtung aufweisen, um seinen Weg durch das Kanal- oder Rohrsystem oder den zu inspizierenden oder zu sanierenden Bereich auszuleuchten.

Um auch bei verschmutzter Kamera die Fahrt oder die Arbeiten des Kanalsanierungsroboters fortsetzen zu können, kann eine Reinigungsvorrichtung für die Kamera am Kanalsanierungsroboter vorgesehen sein. Solch eine Reinigungsvorrichtung kann Düsen zum Aufsprühen einer Reinigungsflüssigkeit umfassen.

Die DE102015012074 B4 zeigt einen Kanalsanierungsroboter mit einem Chassis, das über Räder am Untergrund abgestützt ist, und eine Kameraeinheit, die an dem Chassis gelagert ist. Die Kameraeinheit weist einen mittels einer ersten Antriebsvorrichtung schwenkbaren Kamerakopf auf, der zumindest ein Objektiv und/oder eine Beleuchtungseinrichtung besitzt. Zusätzlich sind ein zumindest teilweise transparentes Schutzgehäuse, das den Kamerakopf zumindest abschnittsweise umgibt, und eine Reinigungsvorrichtung vorgesehen, mittels der eine dem Kamerakopf abgewandte Außenoberfläche des Schutzgehäuses gereinigt werden kann. Dabei ist vorgesehen, dass das Schutzgehäuse mittels einer zweiten Antriebsvorrichtung relativ zum Kamerakopf und relativ zur Reinigungsvorrichtung bewegbar ist.

Es stellt sich die Aufgabe eine Kamera mit einer alternativen Reinigungsvorrichtung bereitzustellen.

Die Aufgabe wird durch eine Kamera für einen Kanalsanierungsroboter sowie einen Kanalsanierungsroboter mit solch einer Kamera gemäß den nebengeordneten Ansprüchen gelöst. Solch eine Kamera kann auch als Kanalsanierungsroboter-Kamera bezeichnet werden.

Die Kamera Kanalsanierungsroboter umfasst einen Kamerakopf, der mittels einer ersten Antriebsvorrichtung drehbar ist, und eine Reinigungsvorrichtung mit einem Wischer, die mittels einer zweiten Antriebsvorrichtung relativ zum Kamerakopf drehbar ist, sodass sich der Wischer um den Kamerakopf dreht und so eine Oberfläche des Kamerakopfes reinigt.

Im drehbaren Kamerakopf ist eine Bildaufnahmevorrichtung vorgesehen, mittels der Bilder aufgenommen werden können. Durch den drehbaren Kamerakopf kann die Blickrichtung der Bildaufnahmevorrichtung verändert werden, beispielsweise durch einen Schwenk nach oben oder unten.

Die Reinigungsvorrichtung bewegt den Wischer zumindest über den Oberflächenbereich, durch den die Bildaufnahme erfolgt. Dabei erfolgt die Reinigung, indem der über die Oberfläche rotierende Wischer Schmutz zumindest abstreift. Unter "Schmutz" werden auch Ablagerungen oder Störkörper auf dem Kamerakopf verstanden. Bei der Reinigung bewegt sich der Wischer zumindest nahe über der Oberfläche. Vorteilhafterweise erfolgt die Reinigung, indem der Wischer zumindest einen Bereich der Oberfläche berührt. Die Reinigungsvorrichtung kann zusätzlich oder alternativ ausgebildet sein, den Wischer zumindest über einen Oberflächenbereich, in oder hinter dem eine Beleuchtungseinrichtung vorgesehen ist, zu bewegen.

Durch die Drehbewegung des Wischers wird nicht nur die Oberfläche des Kamerakopfes gereinigt, sondern eventuell sich vor dem Wischer angesammelter Schmutz kann durch eine Drehbewegung in einen, insbesondere unteren, Bereich des Kamerakopfes geräumt werden, in dem er die Funktion von Kamerakopf und Wischer nicht mehr beeinträchtigt und bestenfalls abfällt.

Vorteilhafterweise umfasst der Kamerakopf einen zumindest teilweise transparenten Bereich in einem Gehäuse, und die Reinigungsvorrichtung ist ausgebildet, den zumindest teilweise transparenten Bereich zu reinigen. Die Kamera ist ferner ausgebildet, durch den zumindest teilweise transparenten Bereich, insbesondere bewegte, Bilder aufzunehmen. In einer Ausführung ist der zumindest teilweise transparente Bereich ein Fenster im Gehäuse, das beispielsweise aus Glas oder Kunststoff ist. Die Reinigung des Fensters erfolgt durch den rotierenden Scheibenwischer der Reinigungsvorrichtung.

Durch den zumindest teilweise transparenten Bereich können Bilder durch die dahinter angeordnete Bildaufnahmevorrichtung aufgenommen können. Alternativ kann der zumindest teilweise transparente Bereich als Teil der Bildaufnahmevorrichtung ausgebildet sein, beispielsweise als deren Objektiv. In einer weiteren Ausführung ist hinter dem zumindest teilweise transparenten Bereich die Beleuchtungsvorrichtung angeordnet oder der zumindest teilweise transparente Bereich ist ein Teil von dieser.

In einer Ausführung umfasst die Kamera eine Bildaufnahmevorrichtung und LEDs im Gehäuse, wobei die Bildaufnahmevorrichtung ein Objektiv aufweist und die LEDs oberhalb, unterhalb und seitlich des Objektivs, nämlich um das Objektiv herum angeordnet sind. Die um das Objektiv herum angeordneten LEDs erlauben eine bessere und gleichmäßigere Ausleuchtung des Aufnahmebereichs als Ausführungen mit lediglich oberhalb und/oder unterhalb in einer Reihe angeordneten LEDs.

Die Kamera, insbesondere der Kamerakopf, kann zumindest tropf- und/oder spritzwassergeschützt und vorteilhafterweise sogar wasserdicht sein. Die Kamera, insbesondere der Kamerakopf, kann staubdicht sein, um rauen Einsatzbedingungen in feuchter und schmutziger Umgebung zu trotzen und die Bildaufnahmevorrichtung zu schützen. Zu diesem Zweck können unter anderem spezielle Dichtungen zwischen den Komponenten, insbesondere Kameragehäusekomponenten, vorgesehen sein.

In einer Ausführung ist der zumindest teilweise transparente Bereich erhaben über der benachbarten Oberfläche ausgebildet, beispielsweise kuppelförmig, sodass der Wischer entlang seiner Bewegung über die Oberfläche des Kamerakopfes nur den zumindest teilweise transparenten Bereich berührt. Solch ein zumindest teilweise transparenter Bereich kann als gewölbte Fensterscheibe ausgebildet sein. Dies reduziert den Verschleiß der Reinigungsvorrichtung, insbesondere des Wischers. Nichtsdestotrotz ist der Wischer vorteilhafterweise austauschbar, um die Lebensdauer der Reinigungsvorrichtung zu verlängern.

In einer Ausführung ist der Kamerakopf um dieselbe Achse drehbar, um die auch die Reinigungsvorrichtung drehbar ist. Die Komponenten können, müssen jedoch nicht geeignet sein, mindestens eine 360-Grad-Drehung um die Achse auszuführen. Sowohl der Kamerakopf als auch die Reinigungsvorrichtung drehen sich um dieselbe Achse, sodass sich der Wischer auf einer Kreisbahn oder einer Kreisabschnittsbahn über einen zylindermantelförmigen oder zylindermantelabschnittsförmigen Bereich des Kamerakopfes, über den der zumindest teilweise transparente Bereich beziehungsweise das Fenster überstehen kann, bewegt. Der Wischer erstreckt sich zwischen Seitenbereichen des Kamerakopfes, wobei er sich in einer Ausführung nicht über die gesamte Länge des zylindermantelförmigen oder zylindermantelabschnittsförmigen Bereichs erstreckt. In dieser Ausführung ergibt sich ein robuster Aufbau, da das Fenster nur eine kleine Bereich überspannt und daher die Gefahr einer Beschädigung des Kamerakopfs durch herabfallende Objekte während des Einsatzes verringert werden kann.

In einer Ausführung ist der Wischer ausgebildet, zumindest eine ganze Drehung um den Kamerakopf auszuführen, um nicht nur den für die Bildaufnahme relevanten Bereich zu reinigen, sondern auch Schmutz vom Gehäuse abzustreifen, der die Bewegung des Kamerakopfes einschränken könnte. Sowohl der Kamerakopf als auch die Reinigungsvorrichtung können jeweils in entgegengesetzte Richtungen drehbar sein, das heißt vor- und zurückgedreht werden.

In einer Ausführung weist die Reinigungsvorrichtung eine mit dem Wischer verbundene Antriebsscheibe oder einen mit dem Wischer verbundenen Antriebsarm auf, die beziehungsweise der benachbart zu einem Seitenbereich des Kamerakopf und drehbar relativ zum Kamerakopf angeordnet ist. Die Antriebsscheibe beziehungsweise der Antriebsarm dreht sich neben dem Seitenbereich des Kamerakopfes, was eine kompakte Ausgestaltung der Kamera ermöglicht. Der Wischer kann mit der Antriebsscheibe über eine lösbare Verbindung beispielsweise verschraubt sein, sodass dieser bei einer Beschädigung durch herabfallende Steine oder ähnliches auf einfache Weise ausgetauscht werden kann.

In einer Ausführung weist die erste Antriebsvorrichtung einen ersten Motor und ein erstes Getriebe, das zwischen den ersten Motor und den Kamerakopf gekoppelt ist, auf. Die zweite Antriebsvorrichtung weist einen zweiten Motor und ein zweites Getriebe, das zwischen den zweiten Motor und die Reinigungsvorrichtung gekoppelt ist, auf. Eine erste Antriebswelle des ersten Motors und eine zweite Antriebswelle des zweiten Motors verlaufen antiparallel, sodass sie mit dem ersten beziehungsweise dem zweiten Getriebe, die an gegenüberliegenden Seitenbereichen des Kamerakopfes angeordnet sind, gekoppelt werden können. Dies geht mit einem kompakten und gegen mechanische Belastungen im Betrieb unempfindlichen Aufbau der Kamera einher. Das erste und das zweite Getriebe können jeweils als Zahnradgetriebe ausgebildet sein, was mit einem platzsparenden Ausbau einhergeht. Der erste und der zweite Motor sind antiparallel mit einem vertikalen Versatz zueinander angeordnet, sodass die Motoren und ihre Antriebswellen zwar parallel verlaufen, jedoch eine entgegengesetzte Orientierung haben. Dadurch weisen die Motorwellen, die an die Getriebe gekoppelt werden, in entgegengesetzte Richtungen.

Der Kanalreinigungsroboter mit solch einer Kamera kann zum Einsatz in einem Rohr oder einem Kanal, insbesondere in einem Abwasserrohr oder einem Entwässerungsrohr, verwendet werden. Der Kamerakopf und die Reinigungsvorrichtung sind um dieselbe Achse drehbar, die winkelig, insbesondere quer, zur Fahrtrichtung des Kanalreinigungsroboters verläuft. Dies erlaubt den aufgenommenen Bildausschnitt nach oben oder unten, oder nach links und rechts, zu schwenken.

Ein Kanalsanierungsroboter ist ein kompaktes, üblicherweise ferngesteuertes Fahrzeug, das in einen Kanal oder ein Rohr einfährt, um den Zustand des Kanals oder Rohrs zu inspizieren und/oder Wartungs-, Sanierungs-, Montagearbeiten und/oder Probenentnahmen darin durchzuführen. Der Kanalsanierungsroboter kann neben der Kamera eine Beleuchtungsvorrichtung und/oder Greifer, Werkzeuge oder andere Mittel für die Wartungs-, Sanierungs- und/oder Montagearbeiten und/oder Probenentnahme aufweisen. Es sei noch bemerkt, dass unter den Begriff "Kanalsanierungsroboter" auch ein Fahrzeug mit Kamera fällt, das lediglich zur Inspektion oder zum Transport ins Kanalinnere dient und keine weiteren Greifer, Werkzeuge oder andere Mittel für Wartungs-, Sanierungs-, Montagearbeiten und/oder Probenentnahmen aufweist. Ferner ist der Begriff "Kanalsanierungsroboter" nicht auf Radfahrzeuge beschränkt, sondern kann auch andere Mittel der Fortbewegung, beispielsweise bei Kettenfahrzeugen, umfassen.

Nachfolgend werden Ausführungsbeispiele der Erfindung anhand der Zeichnung näher erläutert.
Figur 1 zeigt schematisch eine Seitenansicht eines Ausführungsbeispiels eines Kanalsanierungsroboters.
Figur 2 zeigt eine dreidimensionale Ansicht eines Ausführungsbeispiels einer Kamera für einen Kanalsanierungsroboter.
Figur 3 zeigt die Kamera in einer dreidimensionalen Explosionsdarstellung.
Figur 4 zeigt die Kamera in einer weiteren dreidimensionalen Explosionsdarstellung.
Figur 5 zeigt die Kamera in einer Aufrissdarstellung.
Figur 6 zeigt eine dreidimensionale Ansicht eines Ausführungsbeispiels eines ersten Gehäuseteils eines Kamerakopfes und einer Bildaufnahmevorrichtung in einer Explosionsdarstellung.
Figur 7 zeigt eine dreidimensionale Ansicht eines Ausführungsbeispiels der Reinigungsvorrichtung in einer Explosionsdarstellung.
Figur 8 zeigt eine dreidimensionale Ansicht eines weiteren Ausführungsbeispiels einer Kamera für einen Kanalsanierungsroboter.
Figur 9 zeigt eine Aufsicht der Kamera.
Figur 10 zeigt eine Vorderansicht des Kamerakopfes der Kamera.

In den Figuren sind gleiche oder funktional gleichwirkende Bauteile mit den gleichen Bezugszeichen versehen.

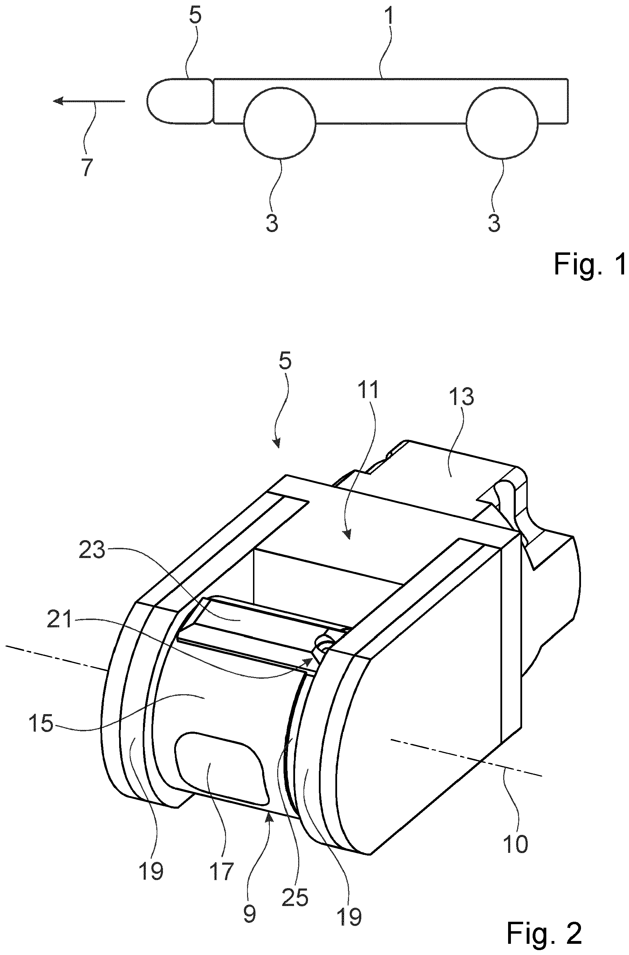

Figur 1 zeigt schematisch eine Seitenansicht eines Ausführungsbeispiels eines Kanalsanierungsroboters. Der Kanalsanierungsroboter ist ein kompaktes, üblicherweise ferngesteuertes Fahrzeug, das in einen Kanal oder ein Rohr, beispielsweise eines Abwasserrohrsystems oder eines Entwässerungsrohrsystems einer Deponie, einfährt. Der Kanalsanierungsroboter weist ein Fahrzeuggehäuse 1 und vier Räder 3 auf. Eine Kamera 5 ist frontseitig am Fahrzeuggehäuse 3 befestigt, um, insbesondere bewegte, Bilder aufzunehmen und bereitzustellen und/oder zu speichern und/oder an ein externes Gerät zu übertragen, mit dem die Bilder dargestellt und/oder gespeichert werden können. Die Übertragung, wie die Fernsteuerung, kann mittels Funkübertragung oder drahtgebunden erfolgen. Anhand der übertragenen Bilder kann die Fernsteuerung des Kanalsanierungsroboters durch einen Benutzer erfolgen. Die Bilder ermöglich die Orientierung im Kanal- oder Rohrsystem sowie die Überprüfung von dessen Zustand anhand der aufgenommenen Bilder.

Die Blickrichtung der Kamera 5 ist vorzugsweise in Fahrtrichtung 7 gerichtet.

Die Fahrtrichtung 7 ist die Richtung, in der der Kanalsanierungsroboter sich wie konstruktiv vorgesehen vorzugsweise bewegt, was jedoch nicht bedeutet, dass er hinsichtlich seiner Fortbewegungsmöglichkeiten in andere Richtungen eingeschränkt sein muss.

Der in Figur 1 gezeigte Kanalsanierungsroboter mit der Kamera 5 ist für eine Inspektion des Kanals oder Rohrs anhand der aufgenommenen Bilder ausgebildet. Ein alternatives Ausführungsbeispiel kann darüber hinaus noch Greifer, Werkzeuge oder andere Mittel für Wartungs-, Sanierungs-, Montagearbeiten und/oder Probenentnahmen aufweisen.

Figur 2 zeigt eine dreidimensionale Ansicht eines Ausführungsbeispiels einer Kamera 5 für einen Kanalsanierungsroboter, beispielsweise wie in Figur 1 beschrieben.

Die Kamera 5 weist einen Kamerakopf 9, ein Antriebssystem 11 und eine Verbindungsvorrichtung 13 auf.

Die Kamera 5 ist so auf dem Kanalsanierungsroboter montiert, dass ihr Kamerakopf 9 in Fahrtrichtung 7 ausgerichtet ist.

Der um eine Längsachse 10 drehbare Kamerakopf 9 hat ein Gehäuse 15 mit zylinderförmiger Grundform, in dessen Zylindermantelbereich ein zumindest teilweise transparenter Bereich ist, durch den die Bildaufnahme erfolgt. Der zumindest teilweise transparente Bereich ist als zumindest teilweise transparentes Fenster 17 ausgebildet, das vorteilhafterweise erhaben zum Gehäuse 15 ausgebildet ist.

Im Gehäuse 15 ist eine Bildaufnahmevorrichtung angeordnet, mittels derer Bilder durch das Fenster 17 aufgenommen werden können. Alternativ kann das Fenster 17 als Teil der Bildaufnahmevorrichtung ausgebildet sein, beispielsweise als deren Objektiv. Eine Bildaufnahmevorrichtung ist eine fototechnische Apparatur, um insbesondere bewegte Bilder aufzunehmen und auf ein Speichermedium aufzeichnen oder über eine Schnittstelle zu übermitteln. Letzteres ist die bevorzugte Variante für einen ferngesteuerten Kanalsanierungsroboter. Die Blickrichtung der Bildaufnahmevorrichtung, auch als Kameraachse bezeichnet, wird durch die Position des Fensters 17 bestimmt.

Der Kamerakopf 9 ist so gelagert, dass er um eine Achse, hier seine Längsachse 10, drehbar ist. Bei der auf dem Kanalsanierungsroboter montierten Kamera 5 verläuft die Längsachse 10 quer zur Fahrtrichtung 7. Der Kamerakopf 9 ist zwischen zwei Haltearmen 19, die sich benachbart zu Grundseiten des zylinderförmigen Gehäuses 15 erstrecken, positioniert. Der Kamerakopf 9 kann zumindest eine teilweise Drehung, in manchen Ausführungsbeispielen auch eine ganze oder mehr als eine ganze Drehung um die Längsachse 10 ausführen.

Durch die Drehung des Gehäuses 15 wird die Position des Fensters 17 verändert, sodass die Blickrichtung und damit auch der Aufnahmebereich der Bildaufnahmevorrichtung der Bewegung des Fensters 17 nach oben oder unten folgend, geschwenkt werden kann. Die Blickrichtung ist somit winklig zur Fahrtrichtung 7 veränderbar.

Die Kamera 5 weist eine Reinigungsvorrichtung 21 mit einem über den Mantelbereich des Gehäuses 15 rotierbaren Wischer 23 auf. Der Reinigungsvorrichtung 21 umfasst ferner eine Antriebsscheibe 25, die um die Längsachse 10 drehbar ist. Am Rand der Antriebsscheibe 25 ist der Wischer 23 befestigt. Durch Drehung der Antriebsscheibe 25 bewegt sich der Wischer 23 zumindest über das Fenster 17, um es zu reinigen. Durch eine ganze Drehung um den Kamerakopf 5 ist auch möglich, den gesamten Mantelbereich des Gehäuses 15 zu reinigen. Die Position des Kamerakopfes 9 und damit der Aufnahmebereich der Bildaufnahmevorrichtung kann dabei unverändert bleiben, sodass die Bildaufnahme vom Reinigungsvorgang nur unwesentlich beeinträchtigt wird.

Die Kamera 5 weist ferner ein Antriebssystem 11 auf, um sowohl den Kamerakopf 9 zu drehen als auch die Reinigungsvorrichtung 21. Es sind voneinander unabhängige Antriebsvorrichtungen für den Kamerakopf 9 und die Reinigungsvorrichtung 21 vorgesehen, sodass deren Drehbewegungen, nämlichen einerseits zur Änderung der Blickrichtung und andererseits und zum Reinigen, voneinander unabhängig ausgeführt werden können. Das Antriebssystem 11 ist bezogen auf die Fahrtrichtung 7 hinter dem Kamerakopf 9 angeordnet und erstreckt sich in den Haltearmen 19 bis zum Kamerakopf 9 und zur Reinigungsvorrichtung 21.

Die Verbindungsvorrichtung 13 an der dem Kamerakopf 9 gegenüberliegenden Seite der Kamera 5 ist geeignet, um die Kamera 5 am Kanalsanierungsrobotergehäuse 1 zu befestigen und kann Schnittstellen für die Versorgung und den Datentransfer der Kamera 5 aufweisen, insbesondere wenn Komponenten für diese Zwecke nicht in der Kamera 5 vorgesehen sind. Sie kann austauschbar ausgebildet sein, um die Kamera 5 für die Montage an verschiedene Kanalsanierungsroboter zu adaptieren. Die Verbindungsvorrichtung 13 lässt sich beispielsweise abschrauben.

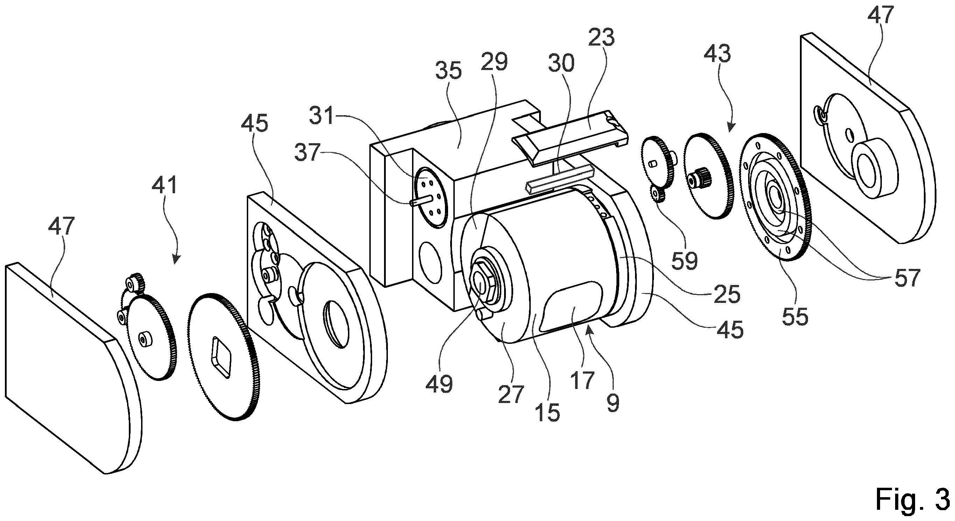

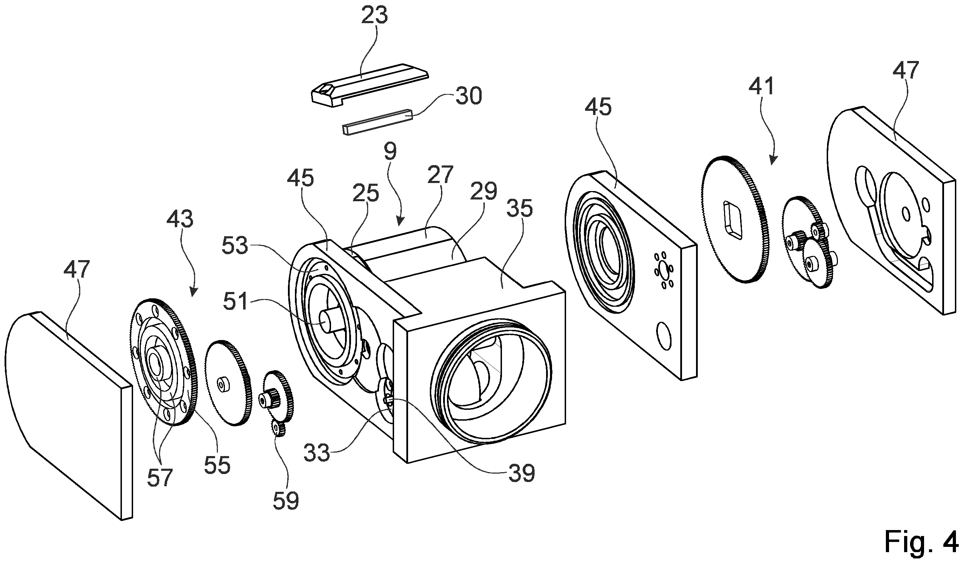

Figur 3 und Figur 4 zeigen die Kamera 5 aus Figur 2 in jeweils einer dreidimensionalen Explosionsdarstellung. Allerdings sind dem Betrachter in den beiden Figuren gegenüber liegende Seiten der Kamera 5 zugewandt.

Im gezeigten Ausführungsbeispiel ist das Gehäuse 15 des Kamerakopfes 9 zweiteilig ausgebildet. Durch das erste Gehäuseteil 27 verläuft die Längsachse 10. Im ersten Gehäuseteil 27 mit dem Fenster 17 ist eine Aussparung, in der die Bildaufnahmevorrichtung positioniert ist. Das zweite Gehäuseteil 29 dient als Deckel und wird mittels Schraubverbindung befestigt. Alternative Befestigungen oder eine Gelenkverbindung zwischen den Gehäuseteilen 27, 29 sind möglich.

Vorteilhafterweise kann der Kamerakopf 9 noch eine Beleuchtungseinrichtung (nicht dargestellt) im Gehäuse 15 umfassen, mittels der Licht durch das Fenster 17 abgestrahlt wird. Alternativ kann solch eine Beleuchtungsvorrichtung auch außerhalb des Fensters 17 am Kamerakopf 9, hinter einem weiteren Fenster im Gehäuse 15 oder an anderer Stelle des Kanalsanierungsroboters vorgesehen sein.

Der Wischer 23 der Reinigungsvorrichtung 21 ist ausgebildet, sich um den Kamerakopf 9 zu drehen und so zumindest im Bereich des Fensters 17 oder aber auch im gesamten überstrichenen Bereich, den Kamerakopf 9 zu reinigen. Der Wischer 23 erstreckt sich zwischen Seitenbereichen des Kamerakopfes 9, die beim zylinderförmigen Kamerakopf 9 Zylindergrundseiten entsprechen. Der Wischer 23 umfasst vorteilhafterweise eine Lippe 30 aus elastischem Material, beispielsweise eine Gummilippe, oder eine Textilauflage, die dem Kamerakopf 9 zugewandt ist und mit der das Fenster 17 gereinigt wird. Der Wischer 23 ist fest an der um die Längsachse 10 des Kamerakopfes 9 drehbaren Antriebsscheibe 25 befestigt, sodass eine Drehbewegung der Antriebsscheibe 25 zu einer Bewegung des Wischers 23 über den zylindermantelförmigen Bereich des Kamerakopfes 9 führt. Anstatt an der Antriebsscheibe 25 kann der Wischer 23 an einem radial zur Längsachse verlaufenden Antriebsarm befestigt sein, der um die Längsachse 10 drehbar ist. Vorteilhafterweise ist der Wischer 23, oder zumindest die Lippe 30 oder die Textilauflage, austauschbar.

Bei erhabenem Fenster 17 ist der Wischer 23 derart vom Gehäuse 15 beabstandet, dass er nur das erhabene Fenster 17 berührt, wenn er um den Kamerakopf 9 rotiert, um lediglich diesen für die Bildaufnahme notwendigen Bereich zu reinigen. Die damit einhergehende Kontaktvermeidung mit der Oberfläche des Kamerakopfes 9 jenseits des Fensters 17 schont den Wischer 23 und reduziert Verschleiß. Nichtsdestotrotz werden stark überstehende Verschmutzungen auf dem Gehäuse 15, die möglicherweise vor das Fenster 17 rutschen oder die Drehbewegung des Kamerakopfes 9 beeinträchtigen könnten, abgestreift.

Das Antriebssystem 11, das sowohl den Kamerakopf 9 als auch die Reinigungsvorrichtung 21 dreht, umfasst einen ersten Elektromotor 31 zum Antrieb des Kamerakopfes 9 und einen zweiten Elektromotor 33 zum Antrieb der Reinigungsvorrichtung 21. Der erste und der zweite Elektromotor 31, 33 sind hinter dem Kamerakopf 9 in einem Antriebsgehäuse 35 angeordnet. Eine erste Motorwelle 37 des ersten Elektromotors 31 erstreckt sich zu einer Seite des Antriebsgehäuses 35 und eine zweite Motorwelle 39 des zweiten Elektromotors 33 erstreckt sich zur gegenüberliegenden Seite des Antriebsgehäuses 35. Die erste und die zweite Motorwelle 37, 39 verlaufen antiparallel und quer zur Fahrtrichtung 7.

Die Übertragung der Drehbewegungen der ersten und der zweiten Motorwelle 37, 39 erfolgt über ein erstes Getriebe 41 beziehungsweise ein zweites Getriebe 43. Sie sind als Zahnradgetriebe ausgebildet und an gegenüberliegenden Seiten des Kamerakopfes 9 jeweils zwischen einer Innenwand 45 und einer Außenwand 47 der Haltearme 19 positioniert und darin gelagert. Die erste Antriebsvorrichtung für den Kamerakopf 5 umfasst den ersten Motor 31 und das erste Getriebe 41. Die zweite Antriebsvorrichtung für die Reinigungsvorrichtung 21 umfasst den zweiten Motor 33 und das zweite Getriebe 43.

Figur 3 zeigt die erste Antriebsvorrichtung dem Betrachter zugewandt auf der linken Bildseite. Das erste Getriebe 41 ist zwischen der ersten Motorwelle 37 und den Kamerakopf 9 gekoppelt. Die erste Motorwelle 37 ist mittels eines an der Motorwelle 37 befestigten Zahnrades mit dem ersten Getriebe 41 gekoppelt. Die Kopplung mit dem Kamerakopf 9 erfolgt beispielhaft durch eine Vierkant-Welle-Nabe-Verbindung mit einer durch die Innenwand 45 verlaufenden Antriebswelle 49 des Kamerakopfes 9, die sich entlang der Längsachse 10 erstreckt. Die gegenüberliegende Seite des Kamerakopfes 9 wird mittels einer durch die andere Innenwand 45 verlaufenden Welle 51 radial in der Außenwand 47 des anderen Haltearms 19 gelagert.

Figur 4 zeigt die zweite Antriebsvorrichtung dem Betrachter zugewandt auf der linken Bildseite. Das zweite Getriebe 43 ist zwischen der zweiten Motorwelle 39 und die Reinigungsvorrichtung 21 gekoppelt. Die zweite Motorwelle 39 ist mittels eines an der zweiten Motorwelle 39 befestigten Zahnrades 59 mit dem zweiten Getriebe 43 gekoppelt.

An der Antriebsscheibe 29 ist eine sich radial durch die Innenwand 45 erstreckende Hohlwelle 53 befestigt. Die Antriebsscheibe 29 und die Hohlwelle 53 sind vorzugsweise einstückig ausgebildet. Die Kopplung mit dem zweiten Getriebe 43 erfolgt durch einen Zahnkranz 55, der mit einer Stirnseite der Hohlwelle 53 verbunden ist. In diesem Ausführungsbeispiel ist der Zahnradkranz 55 verschraubt. Die Drehbewegung der zweiten Motorwelle 39 wird über das zweite Getriebe 43 auf den Zahnkranz 55 und damit auf die Antriebsscheibe 25 der Reinigungsvorrichtung 21 übertragen.

Zischen der Antriebsscheibe 25 und der durch sie verlaufenden radial gelagerten Welle 51 des Kamerakopfes 9 sind Lagerringe 57, damit sich die Komponenten gegeneinander bewegen können.

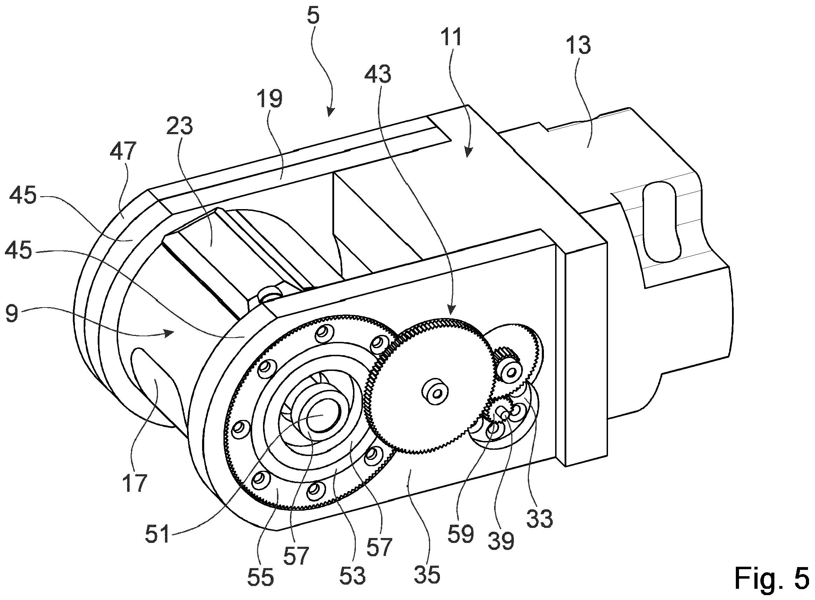

Figur 5 zeigt eine Aufrissdarstellung des Kamerakopfes 9 mit Blick auf die zweite Antriebsvorrichtung und veranschaulicht das Zusammenwirken der Komponenten.

Über das an der zweiten Motorwelle 39 befestigte Zahnrad 59 werden die anderen Zahnräder des zweiten Getriebes 43 gedreht, um die Bewegung der zweiten Motorwelle 39 auf den Zahnkranz 55 zu übertragen. Wegen seiner festen Verbindung mit der Hohlwelle 53 an der Antriebsscheibe 25 wird dadurch auch die Reinigungsvorrichtung 21 und dessen Wischer 23 bewegt.

Nichtsdestotrotz kann wegen der Lagerringe 57 unabhängig von der Bewegung der Reinigungsvorrichtung 21 der Kamerakopf 9 bewegt werden, dessen Welle 51 durch die Antriebsscheibe 25 und die Hohlwelle 53 verläuft.

Die Veränderung der Blickrichtung erfolgt vom ersten Motor 31 angetrieben durch eine Drehung des Kamerakopfes 9 und der Bildaufnahmevorrichtung in dessen Gehäuseinneren.

Im Betrieb der Kamera 5 wird das Fenster 17 gereinigt, indem die Reinigungsvorrichtung 21 angetrieben vom zweiten Motor 33 relativ zum Kamerakopf bewegt wird und dadurch der Wischer 23 zumindest über das Fenster 17 bewegt wird. Die Reinigung kann unabhängig von der Position des Fensters 17 durchgeführt werden, sodass auch bei nach oben oder unten gedrehtem Kamerakopf 9 der aufgenommene Bildausschnitt nicht verändert wird.

Bei der Reinigung ist es nicht erforderlich, dass der Wischer 23 eine ganze Drehung um den Kamerakopf 5 ausführt. Allerdings ist solch ein ganze Drehung um den Kamerakopf 5 ein einfaches Vorgehen, da die Position des Fensters 17 bei diesem Vorgehen für die Reinigung nicht relevant ist. Bei einer Reinigungsvariante, bei der Wischer 23 über das Fenster 17 streicht und sich dann entweder wieder zurück bewegt oder in einer Position auf der gegenüberliegenden Seite des Fensters 17 verbleibt, fließt die Fensterposition in die Steuerung der Wischerbewegung ein, beispielsweise durch Detektion der Fensterposition mittels geeigneter Sensoren oder basierend auf den Ansteuerdaten für die Bewegung des Kamerakopfes 9. Der Reinigungsvorgang kann nach Bedarf per Fernsteuerung oder aktiviert durch einen geeigneten Schmutzdetektor ausgelöst werden. Alternativ oder zusätzlich kann die Reinigung automatisch, beispielsweise in vorgegebenen Zeitintervallen, ausgelöst werden. Die Steuerung des ersten und zweiten Motors 31, 33 zur Drehung des Kamerakopfes 9 beziehungsweise zur Reinigung nach einer oder mehrerer der oben beschriebenen oder weiterer Reinigungsvarianten kann durch eine Steuereinheit in der Kamera 5 erfolgen.

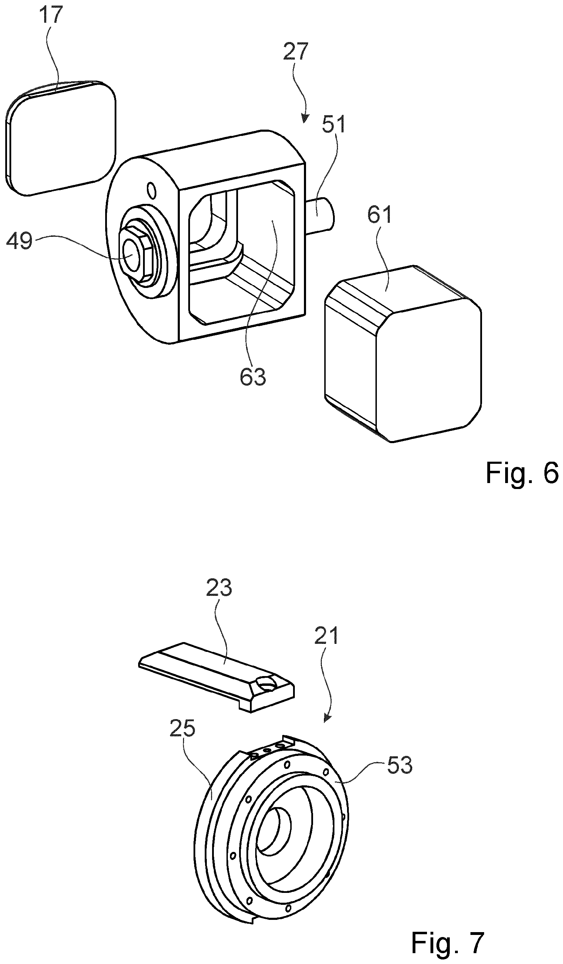

Figur 6 zeigt eine dreidimensionale Ansicht eines Ausführungsbeispiels des ersten Gehäuseteils 27 des Kameragehäuses 15 und der Bildaufnahmevorrichtung 61 in einer Explosionsdarstellung. Das erste Gehäuseteil 27 weist eine Aussparung 63 für die Bildaufnahmevorrichtung 61 auf und ein Fenster 17 am Boden der Aussparung 63, durch das die Bildaufnahme mit der in der Aussparung platzierten Bildaufnahmevorrichtung 61 erfolgt. Das Fenster 17 ist in diesem Ausführungsbeispiel erhaben ausgebildet. Das dargestellte Gehäuseteil 27 hat eine zylinderabschnittsförmige Grundform. Zusammen mit dem montierten Deckel als zweitem Gehäuseteil 29 (in Figur 6 nicht dargestellt) bildet es das zylinderförmige Gehäuse 15. Senkrecht zu den Zylindergrundseiten verläuft entlang der Längsachse10 die Antriebswelle 49, durch die der Kamerakopf 9 mit dem ersten Getriebe 41 gekoppelt und in Drehung versetz wird. Auf der gegenüberliegenden Seite des ersten Gehäuseteils 27 verläuft die Welle 51, die radial gelagert wird, sodass das Gehäuse 15 zwischen den Haltearmen 19 drehbar gehalten wird.

Figur 7 zeigt eine dreidimensionale Ansicht der Reinigungsvorrichtung 21 in einer Explosionsdarstellung. Senkrecht zur Ebene, in der sich die Antriebsscheibe 25 dreht, ist an deren Rand der Wischer 23 montiert. In diesem Ausführungsbeispiel erfolgt die Verbindung mittels einer Schraubverbindung, sodass der Wischer 23 austauschbar ist. Alternative Verbindungen, beispielsweise eine Klippverbindung sind möglich.

Die dem Kamerakopf 9 zugewandte Seite des Wischers 23 ist konkav geformt und korrespondiert mit der Form des Kameragehäuses 15, über das der Wischer 15 bewegt wird. An der dem Kamerakopf 9 zugewandten Seite des Wischers 23 kann eine Gummilippe und/oder eine Textilauflage vorgesehen sein, um die Reinigung über ein bloßes Abstreifen des Schmutzes hinaus zu verbessern.

An der Stirnseite der Hohlwelle 53, die einstückig mit der Antriebsscheibe 25 ausgebildet ist, sind Löcher für eine Schraubverbindung mit dem Zahnkranz 55 des zweiten Getriebes 43. Der zentrale Bereich der Antriebsscheibe 25 weist eine Aussparung auf, durch den die Welle 51 des Kamerakopfes 9 durch die Hohlwelle 53 verläuft.

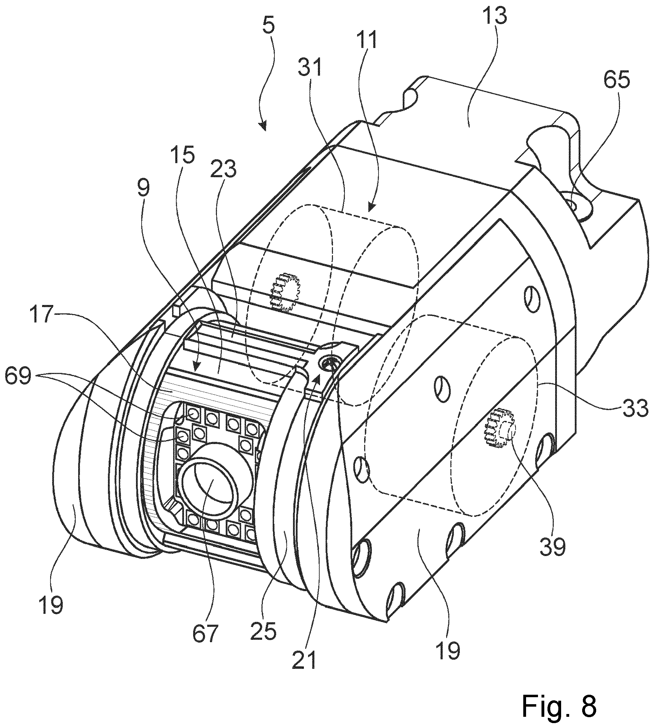

Figur 8 zeigt eine dreidimensionale Ansicht eines weiteren Ausführungsbeispiels einer Kamera 5 für einen Kanalsanierungsroboter.

Die Kamera 5 weist einen Kamerakopf 9, ein Antriebssystem 11 und eine Verbindungsvorrichtung 13 auf. Die Kamera 5 ist auf dem Kanalsanierungsroboter montierbar, sodass ihr Kamerakopf 9 in Fahrtrichtung 7 ausgerichtet ist. Mittels der Verbindungsvorrichtung 13 wird die Kamera 5 am Kanalsanierungsrobotergehäuse 1 befestigt. Die Montage kann mittels an der Verbindungsvorrichtung 13 vorgesehenen Befestigungsmitteln 65, die in diesem Ausführungsbespiel als Löcher für eine Schraubverbindung ausgebildet sind, erfolgen. Die Verbindungsvorrichtung 13 kann Schnittstellen für die Versorgung und den Datentransfer der Kamera 5 aufweisen.

Der um eine Längsachse drehbare Kamerakopf 9 hat ein Gehäuse 15 mit zylinderförmiger Grundform, dessen Zylindermantelbereich ein transparentes Segment aufweist, durch den die Bildaufnahme erfolgt. Der transparente Bereich ist ein gewölbtes Fenster 17, das beispielsweise aus Kunststoff ist und dieselbe Krümmung wie das Gehäuse 15 aufweist, sodass Fenster 17 und Gehäuse 15 eine trommelförmige Gestalt haben.

Im Gehäuse 15 ist eine Bildaufnahmevorrichtung angeordnet, mit der Bilder durch das Fenster 17 aufgenommen werden können. Das Objektiv 67 der Bildaufnahmevorrichtung ist hinter dem Fenster 17 angeordnet. Mehrere LEDs 69 sind zur Beleuchtung um das Objektiv 67 herum angeordnet, sodass sie eine gute und gleichmäßige Ausleuchtung insbesondere in dunkler Umgebung ermöglichen.

Der Kamerakopf 9 ist zwischen zwei Haltearmen 19, die sich benachbart zu Grundseiten des zylinderförmigen Gehäuses 15 erstrecken, positioniert. In ihnen ist der Kamerakopf 9 drehbar gelagert. Die Haltearme 19 haben eine nach oben abgerundete Querschnittskontur. Dadurch wird die Kamera 5 nach oben hin schmaler, was das Durchfahren durch enge Kanalabschnitte erleichtern kann. Der Kamerakopf 9, der um seine Längsachse drehbar ist, kann zumindest eine teilweise Drehung um die Längsachse ausführen, das heißt einen Schwenk nach oben und unten, sodass die Blickrichtung des Objektivs 37 und damit dessen Aufnahmebereich verändert wird.

Die Kamera 5 weist eine Reinigungsvorrichtung 21 mit einem über das Fenster 17 rotierbaren Wischer 23 auf. Der Reinigungsvorrichtung 21 umfasst ferner eine Antriebsscheibe 25, die um die Längsachse 10 drehbar ist. Am Rand der Antriebsscheibe 25 ist der Wischer 23 befestigt. Durch Drehung der Antriebsscheibe 25 bewegt sich der Wischer 23 aus einer Ruheposition oberhalb des Fensters 17 über das Fenster 17 nach unten, um es zu reinigen. Anschließend kann der Wischer 23 entweder zurück nach oben oder durch Fortsetzung der Drehbewegung in dieselbe Richtung um den gesamten Gehäuseumfang herum wieder in seine Ausgangsposition bewegt werden. Die Position des Kamerakopfes 9 und damit der Aufnahmebereich des Objektivs 67 können dabei unverändert bleiben, sodass die Bildaufnahme vom Reinigungsvorgang kaum beeinträchtigt wird. Insbesondere bleibt der Aufnahmebereich unverändert.

Das Antriebssystem 11 und seine im Kamerainneren angeordneten Komponenten sind bereits beispielhaft im Zusammenhang mit den vorangegangenen Ausführungsbeispielen beschrieben worden. Figur 8 veranschaulicht, ohne Darstellung weiterer Details im Gehäuseinneren, die Positionen eines ersten Elektromotors 31 zum Antrieb des Kamerakopfes 9 und eines zweiten Elektromotors 33 zum Antrieb der Reinigungsvorrichtung 21. Eine erste Motorwelle 37 des ersten Elektromotors 31 erstreckt sich zu einer Seite des Antriebsgehäuses und eine zweite Motorwelle 39 des zweiten Elektromotors 33 erstreckt sich zur gegenüberliegenden Seite des Antriebsgehäuses. Die erste und die zweite Motorwelle 37, 39 verlaufen antiparallel und quer zur Fahrtrichtung 7. Auf die Darstellung weiterer Komponenten des Antriebssystems wurde der Anschaulichkeit halber verzichtet.

Die Elektromotoren 31, 33 sind jeweils in einer Längshälfte des Antriebsgehäuses angeordnet. Sie sind vertikal versetzt angeordnet, sodass in diesem Ausführungsbeispiel der erste Elektromotor 31 unterhalb des zweiten Elektromotors 33 angeordnet ist. Die Elektromotoren 31, 33 und ihre Motorwellen 33, 37 verlaufen parallel, sodass sie in entgegengesetzte Richtung orientiert sind. In einem alternativen Ausführungsbeispiel sind die Elektromotoren 31, 33 umgekehrt übereinander angeordnet.

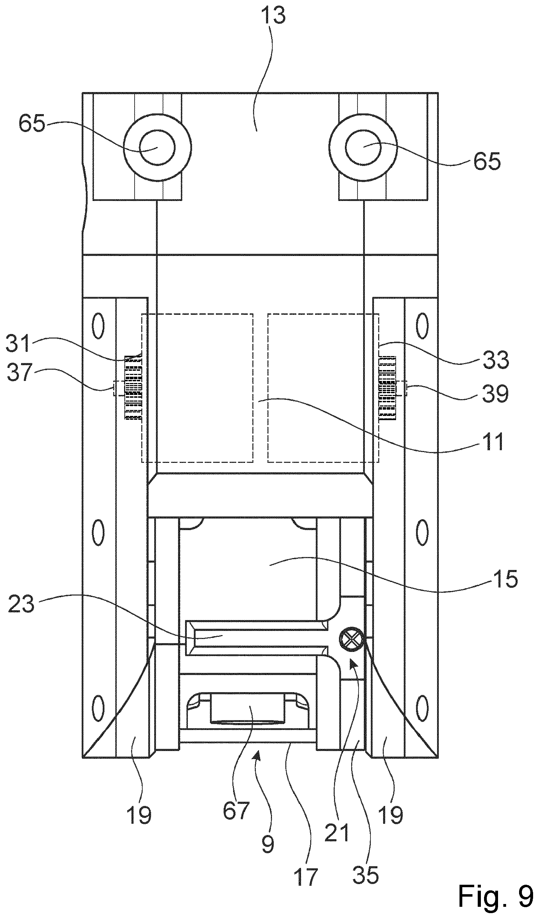

Figur 9 zeigt eine Aufsicht der Kamera 5 aus Figur 8. Sie zeigt die Anordnung des ersten und zweiten Elektromotors 31, 33 in jeweils einer Längshälfte des Gehäuses. Nichtsdestotrotz sind der erste und der zweite Elektromotor 31, 33 vertikal versetzt angeordnet. In einem Ausführungsbeispiel können auch zwei Elektromotoren 31, 33 übereinander im Gehäuse angeordnet sein, deren Länge größer als eine halbe Gehäusebreite ist.

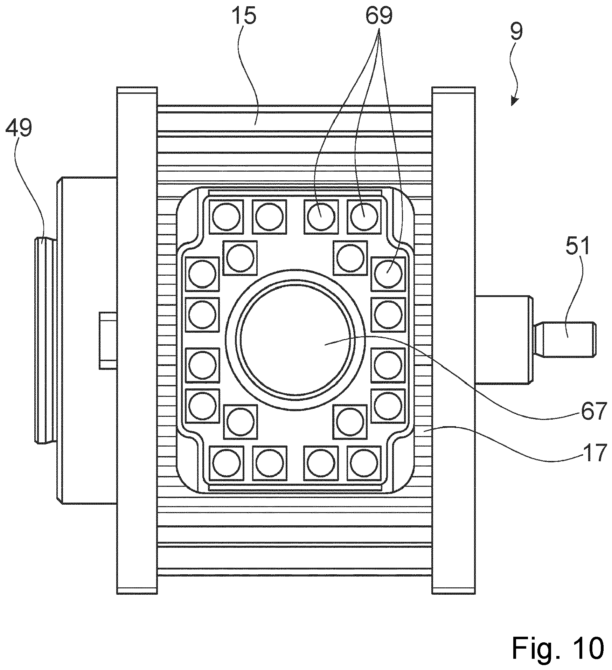

Figur 10 zeigt den Kamerakopf 9 aus der Kamera 5, die in den Figuren 8 und 9 dargestellt ist.

Im zylinderförmigen Gehäuse 15 ist ein als Fenster 17 ausgebildeter transparenter Zylinderbogen, durch den die Bildaufnahme erfolgt. Das Objektiv 67 der Bildaufnahmevorrichtung ist hinter dem Fenster 17 angeordnet. Die gewölbte Fensterscheibe schützt das Objektiv 67 vor Verschmutzung, Beschädigung und Feuchtigkeit. Mehrere LEDs 69 sind zur Beleuchtung des Aufnahmebereichs um das Objektiv 67 herum angeordnet. Im Vergleich zu Ausführungsbeispielen mit lediglich oberhalb und/oder unterhalb in einer Reihe angeordneten LEDs erlaubt die in Figur 10 dargestellte umlaufende Anordnung der LEDs 69 um das Objektiv 67, das heißt sowohl ober- und unterhalb als auch seitlich des Objektivs 67, eine bessere und gleichmäßigere Ausleuchtung des Aufnahmebereichs.

Wellen 49, 51 an beiden Seiten des Kamerakopfes 9 erstrecken sich entlang der Drehachse des Kamerakopfes 9. Über die Wellen 49, 51 ist der Kamerakopf 9 in den Haltearmen der Kamera drehbar gelagert. Eine der Wellen ist als Antriebswelle 49 ausgebildet, die durch ein Getriebe an einen der Elektromotoren gekoppelt ist. Die andere Welle 51 verläuft bei montierter Reinigungsvorrichtung 21 (in Figur 10 nicht dargestellt) durch diese hindurch.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Bezugszeichen

- 1: Fahrzeuggehäuse
- 3: Rad
- 5: Kamera
- 7: Fahrtrichtung
- 9: Kamerakopf
- 10: Längsachse
- 11: Antriebssystem
- 13: Verbindungsvorrichtung
- 15: Gehäuse
- 17: Fenster
- 19: Haltearm
- 21: Reinigungsvorrichtung
- 23: Wischer
- 25: Antriebsscheibe
- 27: Gehäuseteil
- 29: Gehäuseteil
- 30: Lippe
- 31: Motor
- 33: Motor
- 35: Antriebsgehäuse
- 37: Motorwelle
- 39: Motorwelle
- 41: Getriebe
- 43: Getriebe
- 45: Innenwand
- 47: Außenwand
- 49: Antriebswelle
- 51: Welle
- 53: Hohlwelle
- 55: Zahnkranz
- 57: Lagerring
- 59: Zahnrad
- 61: Bildaufnahmevorrichtung
- 63: Aussparung
- 65: Befestigungsmittel
- 67: Objektiv
- 69: LED

## Patentansprüche

1. Kamera (5) für einen Kanalsanierungsroboter umfassend
einen Kamerakopf (9), der mittels einer ersten Antriebsvorrichtung drehbar ist, und
eine Reinigungsvorrichtung (21) mit einem Wischer (23), die mittels einer zweiten Antriebsvorrichtung relativ zum Kamerakopf (9) drehbar ist, sodass sich der Wischer (23) um den Kamerakopf (9) dreht und so eine Oberfläche des Kamerakopfes (9) reinigt.

2. Kamera (5) nach Anspruch 1,
wobei der Kamerakopf (9) einen zumindest teilweise transparenten Bereich (17) in einem Gehäuse (15) umfasst und die Reinigungsvorrichtung (21) ausgebildet ist, den zumindest teilweise transparenten Bereich (17) zu reinigen,
und wobei die Kamera (5) ausgebildet ist, durch den zumindest teilweise transparenten Bereich (17), insbesondere bewegte, Bilder aufzunehmen.

3. Kamera (5) nach Anspruch 2,
umfassend eine Bildaufnahmevorrichtung und LEDs (69) im Gehäuse (15), wobei die Bildaufnahmevorrichtung ein Objektiv (67) aufweist und die LEDs (69) oberhalb, unterhalb und seitlich um das Objektivs (67) herum angeordnet sind.

4. Kamera (5) nach Anspruch 2,
wobei der zumindest teilweise transparente Bereich (17) erhaben über dem benachbarten Gehäuse (15) ausgebildet ist.

5. Kamera (5) nach einem der vorhergehenden Ansprüche,
wobei der Kamerakopf (9) um eine Achse (10) drehbar ist, um die auch die Reinigungsvorrichtung (21) drehbar ist.

6. Kamera (5) nach einem der vorhergehenden Ansprüche,
wobei die Reinigungsvorrichtung (21) ausgebildet ist, dass sich der Wischer (23) auf einer Kreisbahn oder einer Kreisabschnittsbahn über einen zylindermantelförmigen oder zylindermantelabschnittsförmigen Bereich des Kamerakopfes (9) bewegt.

7. Kamera (5) nach einem der vorhergehenden Ansprüche,
wobei der Wischer (23) ausgebildet ist, zumindest eine ganze Drehung um den Kamerakopf (9) auszuführen.

8. Kamera (5) nach einem der Ansprüche 2 bis 7,
wobei der Wischer (23) sich zwischen Seitenbereichen des Kamerakopfes (9) erstreckt.

9. Kamera (5) nach Anspruch 8,
wobei die Reinigungsvorrichtung (21) eine mit dem Wischer (23) verbundene Antriebsscheibe (25) oder einen mit dem Wischer (23) verbundenen Antriebsarm aufweist, die beziehungsweise der benachbart zu einem Seitenbereich des Kamerakopfes (5) angeordnet ist und relativ zum Kamerakopf (9) drehbar ist.

10. Kamera (5) nach einem der vorhergehenden Ansprüche,
wobei der Wischer (23) austauschbar ist.

11. Kamera (5) nach einem der vorhergehenden Ansprüche,
wobei die erste Antriebsvorrichtung einen ersten Motor (31) und ein erstes Getriebe (41), das zwischen den ersten Motor (31) und den Kamerakopf (9) gekoppelt ist, aufweist und wobei die zweite Antriebsvorrichtung einen zweiten Motor (33) und ein zweites Getriebe (43), das zwischen den zweiten Motor (43) und die Reinigungsvorrichtung (21) gekoppelt ist, aufweist,
und wobei das erste und das zweite Getriebe (41, 43) an gegenüberliegenden Seitenbereichen des Kamerakopfes (9) angeordnet sind.

12. Kamera nach Anspruch 11,
wobei der erste und der zweite Motor (31, 33) antiparallel und mit einem vertikalen Versatz zueinander angeordnet sind.

13. Kamera (5) nach Anspruch 11 oder 12,
wobei das erste und das zweite Getriebe (41, 43) jeweils als Zahnradgetriebe ausgebildet sind.

14. Kamera (5) nach einem der Ansprüche 11 bis 13,
wobei eine erste Antriebswelle (37) des ersten Motors (31) und eine zweite Antriebswelle (39) des zweiten Motors (33) antiparallel verlaufen.

15. Kanalreinigungsroboter zum Einsatz in einem Rohr oder einem Kanal, insbesondere in einem Abwasserrohr oder einem Entwässerungsrohr, mit einer Kamera (5) nach einem der vorangegangenen Ansprüche.

16. Kanalreinigungsroboter nach Anspruch 15,
wobei der Kamerakopf (9) und die Reinigungsvorrichtung (21) um dieselbe Achse (5) drehbar sind, die winkelig, insbesondere quer, zur Fahrtrichtung (7) des Kanalreinigungsroboters verläuft.
